# EUROPÄISCHE PATENTANMELDUNG

(11) **EP 3 987 918 A2**
(43) Veröffentlichungstag der Anmeldung: **27.04.2022**
(21) Anmeldenummer: 21184669.6
(22) Anmeldetag: 09.07.2021
(51) Int. Cl.: A01G 9/02, A01G 27/00

(54) **VERTIKALES GARTENSYSTEM**

(30) Priorität: 20.10.2020 DE 202020105988 U
(71) Anmelder: White Wolf Holding GmbH, 9020 Klagenfurt (AT)
(72) Erfinder: SAFTIC, Sasa, 2272 Gorisnica (SI)
(74) Vertreter: Riebling, Peter

(57) **Zusammenfassung**

Vertikales Gartensystem (22) für Pflanzen (34) bestehend aus einer Grundplatte (1) an der mindestens eine Pflanzenbox (17) für mindestens eine Pflanze (34) angeordnet ist, wobei eine Versorgungseinheit (30) die Pflanze (34) in der Pflanzbox (17) mit Wasser, Nahrung und/oder Energie versorgt, wobei mindestens ein Feuchtigkeitssensor (2) die Feuchtigkeit innerhalb der Pflanzbox (17) misst und anhand der gewonnenen Daten (36) ein Pflanzcontroller (3) die Versorgungseinheit (30) steuert, wobei jeder einzelnen Pflanzbox (17) eine eigene Mess- und Versorgungseinheit (40) zugeordnet ist, wobei jeder einzelnen Pflanzbox (17) eine Mess- und Versorgungseinheit (40) zugeordnet ist, wobei die Mess- und Versorgungseinheit (40) den Zustand jeder einzelnen Pflanze (34) erfasst und jede einzelne Pflanze (34) individuell versorgt.

## Beschreibung

Die Erfindung betriff ein vertikales Gartensystem nach den Oberbegriffen der Ansprüche 1 und 2.

Unter einem Garten wird eine abgegrenzte Fläche verstanden, in der Pflanzen vom Menschen kultiviert werden. Neben dem Anbau von Obst- und Gemüse (Nutzgarten), kann ein solcher Garten als Ziergarten angelegt sein, welcher für künstlerische, spirituelle oder therapeutische Zweck genutzt wird. Gärten können nicht nur auf dem horizontalen Erdboden angelegt werden, es ist auch möglich solche Gärten an vertikalen Fassadenwänden eines Hauses anzulegen.

Untersuchung haben gezeigt, dass die maximalen Temperaturschwankungen bei grünen Fassaden nur halb so groß sind. So kann sich beispielsweise eine ungeschützte Wandfläche im Sommer auf bis zu 60 Grad erwärmen, während eine von Pflanzen geschützt Fläche sich lediglich auf höchstens 30 Grad erwärmt. Im Winter hat die Begrünung eine Art Dämmwirkung. Darüber hinaus ersteht ein Temperaturgefälle zwischen der kühleren Hauswand und der überhitzten Umgebung, was zu einer Luftzirkulation führt. Die Fassadenbegründung trägt damit maßgeblich zur Energieeinsparung bei Gebäuden bei.

Die Anordnung von Pflanzen an einem Gebäude wird als Dach-, Fassaden- und Innenraumbegrünung bezeichnet. Hier dient eine Hausfläche als Tragstruktur für eine Kletterpflanze. Im Gegensatz hierzu besteht ein vertikales Gartensystem im Wesentlichen aus einer senkrechten Konstruktion, die an einer Hauswand oder Mauer befestigt ist, wobei über die gesamte Fläche verschiedene Aufnahmen vorhanden sind, in welche die Pflanzen verteilt eingesetzt werden. Entscheidend ist hierbei, dass viele unterschiedliche Pflanzen nebeneinander und übereinander angeordnet werden können, wodurch eine höhere Artenvielfalt erreicht wird. In einem vertikalen Garten können beispielsweise verschiedene Stauden, Gräser und Farner nebeneinander angeordnet werden. Dies sind z.B. Frauenmantel oder Bergenie.

Aus dem Stand der Technik sind bereits vertikale Gartensystems bekannt, welche sensorgesteuert und elektronisch das Licht, die Feuchtigkeit, die Temperatur, den Wasserstand, den pH-Wert und die Luftqualität analysieren und auf Basis dieser gewonnen Daten eine gezielte und automatisiertes Bewässerung und Düngung der Pflanzen durchführen.

Die AT 519705 A1 beschreibt ein selbstragendes Gehäuse für Pflanzen aus einem nicht bzw. schwer brennbaren Material, wobei durch Verbindungselemente und die entsprechenden Verankerungen die Gehäuse in multipler Form flächenmäßig füllend einsetzbar sind. Regulierbare Tropfer dienen der Wasserversorgung. Überschüssiges Wasser im Gehäuse wird durch Öffnungen bzw. Steckverbindungen über Schläuche rückseitig abgeleitet. Ein im Gehäuse integrierter Frostsensor und Feuchtigkeitsfühler unterstützt den Vorgang der Bewässerung.

Mit der EP 3 127 422 A1 wird eine modulare vertikale Gartenanordnung mit automatischer Bewässerung und Ernährung für die Pflanzen offenbart. Die Bewässerung erfolgt mit einem Tropfsystem, wobei jeder Pflanze ein eigener Tropfausgang zugeordnet ist. Ein elektronischer Controller steuert die Magnetventile und eine elektrische Pumpe, sowie ein Ventil zur Regelung der Nährstoffversorgung.

Die bekannten Überwachungs- und Steuerungssysteme für vertikale Gartensysteme sind eher einfach aufgebaut, teuer und schwierig zu bedienen. Darüber hinaus sind die bekannten Systeme nur für eine Pflanzenart ausgelegt und steuern ausschließlich die Wasser- und Nährstoffversorgung aufgrund eines festgelegten Zyklus.

Hinzu kommt, dass bei den meisten Versorgungslösungen Sensoren eingesetzt werden, welche in direktem Kontakt mit der Erde oder dem Wasser stehen. Aufgrund der auftretenden Korrosion haben die Sensoren meistens eine verkürzte Lebensdauer.

Aufgabe der vorliegenden Erfindung ist es nun, ein vertikales Gartensystem bereitzustellen, welches die Umweltbedingungen analysiert und auf Basis dieser Daten eine automatische und individuelle Versorgung von verschiedenen Pflanzen ausführt.

Zur Lösung der gestellten Aufgabe ist die Erfindung durch die technische Lehre des Anspruches 1 gekennzeichnet.

Wesentliches Merkmal der Erfindung ist, dass bei dem vertikalen Gartensystem jeder einzelnen Pflanzbox eine individuelle Mess- und Versorgungseinheit zugeordnet ist, wobei die Mess- und Versorgungseinheit eine Trägerbasis für die Pflanzbox auf der Grundplatte des vertikalen Gartensystems bildet.

Jede Pflanzbox weist nun eine eigene Mess- und Versorgungseinheit auf. Dies bedeutet, dass die Feuchtigkeit in jeder einzelnen Pflanzbox separat gemessen, von dem Pflanzcontroller ausgewertet und im Anschluss daran jede einzelne Pflanzbox gezielt mit Wasser, Nahrung, Licht und/oder Energie versorgt wird. Dies stellt ein wesentlicher Unterschied gegenüber dem Stand der Technik dar, bei welchem zwar ebenfalls die Feuchtigkeit in der Pflanzbox gemessen wurde, jedoch im Anschluss daran alle Pflanzboxen gleichzeitig mit der gleichen Menge an Wasser, Nahrung und/oder Energie versorgt wurden.

Die erfindungsgemäße Ausführungsform stellt somit die Bedürfnisse jeder einzelnen Pflanze des vertikalen Gartensystems fest und steuert daraufhin gezielt die Versorgung der einzelnen Pflanze.

Bei einer ersten bevorzugten Ausführungsform ist der Feuchtigkeitssensor als kapazitiver Sensor ausgebildet, welcher kapazitiv die Feuchtigkeit in der Pflanzbox von außen durch die Wand der Pflanzbox misst.
Bei einer weiteren bevorzugten Ausführungsform ist der Feuchtigkeitssensor als Lasersensor ausgebildet, welcher den Füllstand innerhalb der Pflanzbox misst. Die Messung erfolgt berührungslos. Ein weiterer Vorteil ist, dass der Laserstrahl nicht mit seiner Umgebung interagiert oder von ihr beeinflusst wird, so dass keinerlei Störsignale ausgeblendet werden müssen. Des Weiteren können auch klare Flüssigkeit mit dem Lasersensor detektiert werden.

Ebenso ist es möglich den Feuchtigkeitssensor als Time-of-Flight (ToF)-Sensor auszubilden. Der Sensor misst direkt die Entfernung zum Objekt auf der Grundlage der Zeit, in der die emittierten Photonen reflektiert werden. Dadurch ist eine genaue Entfernungsmessung unabhängig von den Oberflächeneigenschaften des Objekts möglich.

Vorzugsweise erhält der interne Pflanzcontroller weitere Daten von zusätzlichen Sensoren, welche die Umweltbedingungen des vertikalen Gartensystems erfassen. Solche Umweltbedingungen können beispielsweise Licht, Luftfeuchtigkeit, Temperatur, Wasserstand und Luftqualität. Diese Umweltbedingungen werden von dem Pflanzcontroller gesammelt, analysiert und ausgewertet. Der Pflanzcontroller besitzt eine Datenbank, auf welcher verschiedene Präferenzen (Optimalwerte) für die einzelnen Pflanzen abgespeichert sind. Auf der Datenbank des Controllers sind somit bereits bestimmten Umweltbedingungen abgespeichert, welche vorteilhaft für die jeweilige Pflanze des vertikalen Gartensystems sind.

Unter dem Begriff Mess- und Versorgungseinheit werden alle Bauteile verstanden, welche für den Messvorgang der Pflanze zum Erfassen des Ist-Zustandes und die gezielte Versorgung der Pflanze eingesetzt werden. Dies können beispielsweise Sensoren zur Messung der Feuchtigkeit, Lufttemperatur, Luftdruck, Luftqualität, Wasserstand in der Wasserbox, Wassertemperatur, Nährstoffversorgung, pH-Gehalt, Lichtverhältnis, optischer Zustand der Pflanze usw. sein. Die Versorgungseinheit kann beispielsweise eine Wasserbox, mehrere Schläuche für die Zu- und Ableitung des Wassers in und aus der Pflanzbox, Ventile oder Aktuatoren zur gezielten Abgabe von Nährstoffen an die einzelne Pflanzboxen, Lichtquellen, Aktuatoren für die Belüftung oder Steuerungsmodul für die Klimaanlage, usw. sein.

Ein weiteres wesentliches Merkmal der Erfindung ist, dass jeder Pflanzbox ein Feuchtigkeitssensor zugeordnet ist, wobei mindestens ein Pflanzcontroller über eine Schnittstelle mit einer Cloud (Cloud Computing) verbunden ist, von welcher er Daten für die Steuerung der Mess- und Versorgungseinheit erhält.

Der interne Pflanzcontroller sammelt die Daten von dem Feuchtigkeitssensor, analysiert und wertet die Daten aus und regelt die Versorgungseinheit. Hierfür weist der Pflanzcontroller eine Datenbank auf, auf welcher bereits Optimalwerte (=Präferenzen) für eine Versorgung der jeweiligen Pflanzen abgelegt sind. Optional kann der Pflanzcontroller mit einem eigenen Algorithmus eine Verbesserung der Werte vornehmen und diese bei den Pflanzen anwenden.

Der interne Pflanzcontroller ist beispielsweise über eine Schnittstelle der (externen) Cloud verbunden. Bei der Cloud (Cloud Computing oder Datenwolke) handelt es sich um eine externe IT-Infrastruktur, welche z.B. einen Speicherplatz, einen eigenen Controller und/oder eine Anwendungssoftware aufweist.

Die Cloud ist bevorzugt als Datenbank ausgebildet, welche die Daten von mehreren vertikalen Gartensystemen erhält und sammelt. Dadurch werden zu jeder einzelnen Pflanze unterschiedliche Umweltbedingungen abgespeichert und hieraus den Optimalwert gebildet. Auf der Basis dieses Optimalwertes regelt dann der Pflanzcontroller die Versorgungseinheit des vertikale Gartensystems.

Der Optimalwert kann beispielsweise eine bestimmte Wassermenge für die Pflanze X sein oder ein bestimmter Lichtwert für die Pflanze X. Der Optimalwert kann aber auch eine Kombination aus verschiedenen Werten, wie z.B. Wassermenge, Lichtbedarf, Nährstoffmenge, Belüftung usw. für eine bestimmte Pflanze sein.

Entscheidend ist, dass bei dem erfindungsgemäßen vertikalen Gartensystem die Umweltbedingungen durch Sensoren erfasst werden und auf der Grundlage der Präferenzen der Pflanze das System automatisiert z.B. die Wasserversorgung, Nährstoffe, Temperatur usw. anpasst.

Für die Gartenstaude Frauenmantel sind beispielsweise die folgenden Präferenzen in der Cloud hinterlegt:
1) Grundfarbe der Pflanze: sommergrünes Laub
2) Farbe der Blüten: gelb-grünen, kleinen Einzelblüten
3) Standort: Sonne, Halbschatten
4) Blühzeit: Sommermonate
5) Boden: nährstoffreichen, durchlässigen Boden
6) Temperatur: moderat
7) Wasserbedarf: gute Versorgung notwendig, Staunässe vermeiden
8) Wasserart: kalkfreies Wasser
9) Wassertemperatur: lauwarmes Wasser
10)Luftfeuchtigkeit: mittel

Die Cloud erhält ständig von den einzelnen vertikalen Gartensystemen weitere Werte und gleicht diese ab bzw. errechnet hieraus einen neuen Optimalwert (Präferenz). Ziel der Cloud ist es einen optimalen Wert zu finden, welcher als Basis für die einzelnen vertikalen Gartensysteme dient.

Des Weiteren besteht die Möglichkeit, dass der Benutzer auf die Cloud zugreift, um weitere Werte manuell einzugeben oder bestimmte Werte zu verändern bzw. anzupassen. Ebenso kann ein Abgleich mit einer allgemeinen Pflanzendatenbank einer Universität oder dergleichen stattfinden.

Bei einer weiteren bevorzugten Ausführungsform kann ein externer Benutzer auf die einzelnen vertikalen Gartensysteme zugreifen, die Daten kontrollieren und ggf. anpassen. Dadurch ist es möglich, dass nur ein zentraler Benutzer mehrere Gartensysteme aus der Ferne kontrolliert und steuert.

Bevorzugt gibt das vertikale Gartensystem eine Empfehlung an den Endbenutzer ab. Dies können beispielsweise Empfehlung hinsichtlich der Luftqualität oder der Belichtung sein. Solche Empfehlungen sind immer dann sinnvoll, wenn das vertikale Gartensystem beispielsweise in einem Bürogebäude angeordnet ist. Die Angestellten in der näheren Umgebung kennen sich oftmals nicht mit einem solchen vertikalen Gartensystem und den dort befindlichen Pflanzen aus. Das erfindungsgemäße Gartensystem gibt daher eine Meldung entweder auf dem eigenen Bildschirm des Systems oder auf den Bildschirm der Angestellten aus, dass beispielsweise die Luftqualität in der Umgebung des Systems zu schlecht ist und daher dringend gelüftet werden muss. Oder die Pflanzen benötigen mehr Licht, so dass der Endbenutzer zumindest für einen bestimmten Zeitraum die Jalousien öffnen sollte. Sollte keiner der Angestellten in der näheren Umgebung reagieren, so wird das erfindungsgemäße vertikale Gartensystem entweder den Hausmeister oder einen externen Service benachrichtigen.

Die Grundplatte besteht aus dem festen Trägermaterial, wie z.B. Metall, Kunststoff, faserverstärktem Kunststoff. Die Befestigung des Feuchtigkeitssensors auf der Grundplatte erfolgt entweder mit einer fixen oder lösbaren Verbindung. Ein solche Verbindung kann z.B. eine Schraubverbindung, eine Klick-Verbindung, eine Steckverbindung oder dergleichen sein.

Der Feuchtigkeitssensor ist als Trägerbasis zwischen der Grundplatte und der Pflanzbox ausgebildet. Hierfür weist der Feuchtigkeitssensor eine eigene Aufnahme für die Pflanzbox auf. Eine solche Aufnahme kann eine fixe oder lösbaren Verbindung sein. Eine solche Aufnahme ist beispielsweise eine Klick-Verbindung, mit welcher die Pflanzbox werkzeuglos auf dem Feuchtigkeitssensor angeordnet wird.

Es ist jedoch auch möglich, dass die Pflanzbox die Trägerbasis für den Feuchtigkeitssensor ist, welcher mit einer lösbaren Verbindung (z.B. Klick-Verbindung) an der Pflanzbox befestigt wird. Die Pflanzbox und der Feuchtigkeitssensor bilden dann eine Einheit aus, welche an der Grundplatte befestigt werden.

Bevorzugt ist die Pflanzbox größer als der Feuchtigkeitssensor ausgebildet und überdeckt diesen, so dass ausschließlich die Pflanzbox zu sehen ist.

Die Pflanzbox ist beispielsweise mit einem Substrat oder einer Steinwolle gefüllt, in welches die eigentliche Pflanze eingepflanzt wird.

Die Erfindung ist jedoch nicht auf die ausschließliche Anordnung eines Feuchtigkeitssensors auf der Grundplatte beschränkt. Es kann vielmehr jeder mögliche Sensor (z.B. Temperatursensor, Luftdrucksensor, usw.) als Trägerbasis für die Pflanzbox verwendet werden. Darüber hinaus muss nicht zwangsläufig jede Pflanzbox einen eigenen Sensor aufweisen. Stattdessen kann die jeweilige Pflanzbox auch nur mit einem Abstandhalter mit der Grundplatte verbunden sein.

Das vertikale Gartensystem weist bevorzugt mindestens einen Sensor auf, welcher mindestens eine der folgenden Umweltbedingungen misst:
- Feuchtigkeit
- Licht
- Füllstand der Pflanzbox und/oder der Wasserbox
- Wassertemperatur der Wasserbox
- Umgebungstemperatur des vertikalen Gartensystems
- pH-Wert

Die Feuchtigkeit spielt bei dem vertikalen Gartensystem eine entscheiden Rolle in Bezug auf die Wasserversorgung der Pflanze. Zur Messung der Feuchtigkeit wird eine Leiterplatte mit einem kapazitiven Sensor (FDC-Sensor) eingesetzt. Der FDC-Sensor ist ein hochauflösender, mehrkanaliger Kapazitäts-Digital-Wandler zur Implementierung kapazitiver Abtastlösungen. Der FDC-Sensor ist ein Kapazitäts-Digital-Wandler (FDC), der die Schwingungsfrequenz eines LC-Resonators misst. Das Gerät gibt einen digitalen Wert aus, der proportional zur Frequenz ist. Diese Frequenzmessung kann in eine äquivalente Kapazität umgewandelt werden.

Es ist ferner möglich, dass zur Messung der Feuchtigkeit innerhalb der Pflanzbox ein Lasersensor oder Tof-Sensor eingesetzt wird.

Bei dem erfindungsgemäßen vertikalen Gartensystem wird die Echtzeit-Kapazität des Feuchtigkeitssensors mit den historischen Daten kombiniert, um die Daten zu normalisieren und den Bodenfeuchtegehalt zu bestimmen. Der Sensor wird bevorzugt jedes Mal neu kalibriert, wenn die Pflanze bewässert wird, um die Kapazität der umgebenden Materialien zu minimieren.

Da die Kapazität in verschiedenen Umgebungen (Temperatur, Luftfeuchtigkeit, Licht und Kapazität des umgebenden Materials) unterschiedliche Werte hat, werden die Daten von diesen Sensoren einbezogen, um den korrekten Bodenfeuchtigkeitsgrad zu berechnen.

Licht spielt für Pflanzen eine wichtige Rolle. Nicht alle Pflanzen können bei unterschiedlichen Lichtverhältnissen sich gleich gut ausbilden. Auf der Grundlage des Lichtsensors (in Kombination mit anderen Umgebungsdaten) kann das System Empfehlungen generieren. Dies können beispielsweise die Regelung der Beleuchtung oder der Jalousien sein. Zusätzlich werden dem Benutzer Lichtwerte für eine Übersicht und Statistik der Benutzerumgebung angezeigt.

Die Temperatur hat einen direkten Einfluss auf den Feuchtigkeitssensor. Der Wert des Temperatursensors wird in erster Linie zur Feuchtigkeitsberechnung verwendet. Darüber hinaus wird die Temperatur auch in das Empfehlungssystem (Optimalwert) und zur Übersicht und Statistik der Benutzerumgebung eingebunden.

Das vertikale Gartensystem ist mit einer eignen Wasserversorgung ausgestatte, wobei externes Wasser zugeführt und überschüssiges Wasser in einem Wasserbox gesammelt wird.

Der Wasserstand wird mit einem separaten Sensor gemessen. Bevorzugt handelt es sich hierbei ebenfalls um einen kapazitiven Sensor. Basierend auf dem Wasserstand und der Wasserversorgung werden zwei Aktionen ausgeführt:
- Wenn Wasser aus einem Wassersystem der Wasserbox zugeführt wird, wird anhand des Wasserstands der Füllvorgang geregelt.
- Wenn die Wasserbox manuell mit Wasser aufgefüllt wird, so wird bei einem zu niedrigen Wasserstand ein Alarm (akustisch, optisch) erzeugt, dass die Wasserbox wieder aufgefüllt werden muss.

Der Wasserstand kann ferner durch den Wasserstandssensor und durch eine Vorhersage bestimmt werden, welche berechnet wie viel Wasser aus den Pflanzenboxen in die Wasserbox zurückgeführt wird, um ein Überlaufen zu verhindern.

Ein Luftqualitätssensor bestimmt den CO2-Gehalt (Näherung) und die Anzahl der TVOC-Partikel in der Luft. Diese beiden Faktoren in Kombination mit der allgemeinen Luftqualität der Umgebungsluft können graphisch dargestellt werden und zeigen dem Benutzer, wie das vertikale Gartensystem die Luftqualität in der Umgebung positiv beeinflusst. Der Luftqualitätssensor wird auch für eine allgemeine Richtlinie und Empfehlungen für den Benutzer verwendet. Dies kann beispielsweise eine Empfehlung sein in der Art: Öffnen Sie das Fenster für 10 Minuten.

Des Weiteren erhält das vertikale Gartensystem die Daten der Wettervorhersage und den Luftdruck. Die Wettervorhersage ist hierbei wichtig für den Innen- und Außenbereich.

Luftfeuchtigkeit und Temperatur in Innenräumen weisen eine klein, aber immer noch signifikante Korrelation zwischen Luftfeuchtigkeit und Temperatur innen und außen auf. Die Korrelation unterscheidet sich je nach dem umgebenden Material und der Gebäudeisolation. Dieser Korrelationsfaktor wird täglich berechnet und wird mit jedem neuen Dateneingang immer genauer. Auf dieser Grundlage kann vorhergesagt werden, dass die Bewässerung verschoben oder früher vorgenommen werden muss, wenn zu erwarten ist, dass die Luft ein höheres oder niedrigeres Feuchtigkeitsniveau haben wird.

Wettervorhersagen im Freien haben einen erheblichen Einfluss auf die Bewässerungshäufigkeit. Da mit dem vertikalen Gartensystem eine ökologische Lösung erreicht werden soll, wird die allgemeine Wasserprognose berücksichtig, wenn eine zusätzliche Bewässerung erforderlich sein sollte.

Jede Pflanze stellt andere Anforderungen an ein optimales Wachstum. Die Plananforderungen spielen eine entscheidende Rolle in dem Bewässerungsalgorithmus. Die Plananforderungen helfen dabei zu bestimmen, welche Pflanzen für eine bestimmte Umgebung besser geeignet sind.

Die Feuchtigkeitssensoren für Bodenfeuchte ermöglichen es die Kapazität ohne direkten Kontakt mit Boden oder Wasser zu messen. Damit wird das häufigste Problem (Korrosion), das bei Sensoren zur Messung der Bodenfeuchte auftritt, eliminiert.

Die Daten werden auf zwei Ebenen gesammelt und analysiert:
- Lokal auf dem Hauptrechner
- In der Cloud

Die lokale Speicherung der Daten ist begrenzt. Die Bewässerungsentscheidungen aus den lokalen Daten sollen nur verwendet werden, wenn das vertikale Gartensystem für einen längeren Zeitraum von der Cloud getrennt ist. Wenn beispielsweise für einen längeren Zeitraum keine Internetverbindung verfügbar ist, wird trotzdem eine Bewässerung durchführt und Benachrichtigungen an die Benutzer innerhalb des lokalen Netzwerks gesendet.

Die Verbindung mit der Cloud ist jedoch wichtig, da die Entscheidung, welche ausschließlich auf den lokalen Daten basieren nicht so präzise sind, wie Entscheidungen, die in der Cloud getroffen werden, da einige, zusätzliche Daten fehlen (Wettervorhersage, längere Datennormalisierungen). Sobald das vertikale Gartensystem die Verbindung zur Wolke wiederhergestellt hat, werden alle lokalen Daten zur weiteren Analyse und zur Verbesserung der Bewässerungsentscheidungen in die Cloud verschoben.

Die Speicherung in der Cloud ist "unbegrenzt" und liefert mehr Daten, welche für eine fundiertere Entscheidungen verwendet werden können. Dies bedeutet, dass der lokale Pflanzcontroller eher klein ausgebildet sein kann, da die meiste Rechenleistung in der Cloud erfolgt.

Wesentlicher Vorteil des erfindungsgemäßen vertikalen Gartensystems ist die Automatisierung. Der Endbenutzer muss sich nicht um das vertikale Gartensystem kümmern und benötigt keine spezifischen Kenntnisse. Die Bewässerung ist vollständig automatisiert.

Normalerweise haben die Endbenutzer keinen Zugang zu Informationen über ihre lokale Umgebung. Der Zugang zu Feuchtigkeits-, Temperatur- und Luftqualitätsdaten kann jedoch dem Endnutzer helfen, ihren Luftstrom oder ihren Lebensstil zu ändern, um das allgemeine Wohlbefinden des Nutzers und der Pflanzen zu verbessern.

Die Benutzer haben Zugang zu der Benutzeroberfläche des vertikalen Gartensystems, welches die Pflanzeninformationen, den Feuchtigkeitsgehalt in den Pflanzenkästen und Umweltfaktoren anzeigt. Zusätzlich zur Anzeige der Daten kann der Benutzer auch bestimmte Schritte initialisieren, wenn er glaubt, dass diese erforderlich sind (z.B. manuelle Bewässerung).
Auf das vertikale Gartensystem kann ferner über eine mobile Anwendung (App) zugegriffen werden, welche die verfügbaren Daten dargestellt. Darüber hinaus wird der Benutzer über die APP benachrichtigt, wenn wichtige Ereignisse oder Empfehlungen verfügbar sind.

Bei der Ersteinrichtung der mobilen Anwendung wird das vertikale Gartensystem mit dem Internet verbunden. Sobald dieser Schritt abgeschlossen ist, kann der Fernzugriff auf das vertikale Gartensystem aktiviert werden. Das bedeutet, dass die Cloud-Benutzeroberfläche und die mobile Anwendung von überall aus geöffnet werden kann, solange eine Internetverbindung besteht.

Mit jeder neuen Dateneingabe lernt der Algorithmus und passt sich an die Umgebung an. Korrelationsfaktoren werden modifiziert, um die Bewässerungshäufigkeit besser bestimmen zu können. Es wird ständig ein neuer Optimalwert gebildet.

Bevorzugt hat jeder Pflanzenkasten eigene Sensoren und eine eigene Wasserversorgung. Auf dieser Grundlage können Pflanzen mit unterschiedlichen Anforderungen in derselben vertikalen Gartensystem wachsen.

Das vertikale Gartensystem ist bevorzugt modular ausgebildet. Dies bedeutet, dass die Pflanzkästen unterschiedliche Formen aufweisen können und an verschiedenen Stellen an das vertikalen Wand platziert werden können.

Sobald Design, Platzierung, Material- und Pflanzenauswahl getroffen wurde, kann das vertikale Gartensystem an der Innen- oder Außenwand (oder Struktur) montiert werden. Die Datenkabel werden zwischen dem Pflanzcontroller und den Sensoren und die Wasserleitungen mit der Wasserbox verbunden. Bevorzugt hat jede Pflanzenbox einen eigenen Feuchtigkeitssensor und ein Ventil, das den Wassereingang steuert.

Bei der Ersteinrichtung verbindet der Benutzer das vertikale Gartensystem mit dem Netzwerk.

Folgende Verfahrensschritte finden statt:
1. Die Daten werden vom Feuchtigkeitssensor, Lichtsensor, Temperatursensor, Wasserstandssensor und/oder Luftqualitätssensor abgerufen;
2. Die Daten werden lokal auf dem Pflanzcontroller gespeichert;
3. Danach werden die Daten vom Pflanzcontroller auf die Cloud übertragen;
4. Zusätzliche Daten werden aus der Wettervorhersage und der Pflanzendatenbank abgerufen;
5. Das Bewässerungsmodell wird generiert und an das lokale System zurück übertragen;
6. Sollten bestimmte Ereignisse eine Bewässerung notwendig machen, so wird das Bewässerungsmodell ausgelöst und die Pflanzen werden bewässert;
7. Neue Daten werden von den Sensoren abgerufen und lokal gespeichert und in die Cloud übertragen;
8. Ein neues, verbessertes Modell (Optimalwert) wird generiert und zurück an das vertikale Gartensystem übertragen;

Bei einer weiteren bevorzugten Ausführungsform ist das Verfahren zum Betrieb eines vertikalen Gartensystems, gekennzeichnet durch die folgenden Verfahrensschritte:
1. Erfassung der Daten vom mindestens einem Feuchtigkeitssensor, einem Lichtsensor, einem Temperatursensor, einem Wasserstandsensor und/oder Luftqualitätssensor;
2. Sammeln und Speichern der Daten auf einem Pflanzcontroller;
3. Übertragung der Daten ausgehend von dem Pflanzcontroller in eine Cloud;
4. Abrufen von zusätzlichen Daten von einer externen Wettervorhersage und/oder einer Pflanzendatenbank und/oder weiteren vertikalen Gartensystemen;
5. Anhand aller gewonnen Daten und mit Hilfe eines Vorhersagealgorithmus wird ein Optimalwert für eine Versorgungseinheit des vertikalen Gartensystems gebildet und an das vertikale Gartensystem übertragen;
6. Steuerung der Versorgungseinheit durch den Pflanzcontroller mit dem Optimalwert aus der Cloud.

Unter Data-Mining-Prozess wird der Prozess zur Entdeckung von Mustern in großen Datensätzen verstanden. Die Datensätze bestehen aus Daten von den Sensoren, den extern empfangenen Wettervorhersagedaten und den Präferenzen einzelner Pflanzen. In diesem Prozess werden Vorverarbeitungsmethoden eingesetzt, um das Datenrauschen zu entfernen. Im Rahmen des Data-Mining-Prozesses findet eine Erkennung von Anomalien und zur Regression, statt um die Ergebnisse für den Vorhersage-Algorithmus vorherzusagen.

Unter maschinellem Lernprozess wird der Prozess verstanden, bei dem sich der Vorhersage-Algorithmus automatisch durch Erfahrung (neue Dateneingabe) verbessert. Das maschinelle Lernen wird eingesetzt, um Vorhersagen auf der Grundlage bekannter Eigenschaften aus den zuvor abgerufenen Daten zu treffen und um periodisch ein neues Modell für zukünftige Vorhersagen zu erstellen.

Unter dem Begriff Pflanzenbox wird der Kasten verstanden, in dem sich der Boden und die Pflanzen befinden. Die Pflanzenbox hat einen Wassereingang und einen Wasserausgang, die von jeweils einem Aktuator (Stellglied) gesteuert werden. Der Aktuator erhält seine Signale von der Recheneinheit.

Unter einer Wasserbox wird ein Behälter verstanden, in dem sich das Wasser für die Versorgung der Pflanzen befindet. Die Wasserbox hat optional einen Wassereingang, um die Wasserbox zu füllen. Wenn der Wassereingang nicht verwendet wird, muss der Wasserbehälter manuell mit Wasser befüllt werden. Die Pumpe wird verwendet, um das Wasser aus der Wasserbox zu den Pflanzboxen zu pumpen.

Unter Bewässerung wird der Prozess verstanden, bei dem Wasser aus der Wasserbox mittels einer Pumpe in die Pflanzbox befördert wird. Zusätzlich wird der Wassereingang in den Pflanzkasten durch das Stellglied (Ventil) gesteuert.

Unter dem Begriff Wettervorhersagedaten wird das Abrufen von Wettervorhersagedaten aus externen kostenlosen und/oder bezahlten Quellen verstanden. Die abgerufenen Daten bestehen aus Wetterparametern (Temperatur, Feuchtigkeit, Wind, Wolken, Niederschlag, Verdunstung, Schnee und Frost, usw.).

Unter dem Begriff Präferenzen für die einzelnen Pflanzen wird ein Datensatz für jede Pflanze verstanden. Die Daten bestehen aus erforderlicher Boden- und Umgebungsfeuchte, Lichtbedarf, Bodenvolumenbedarf, Pflanzenwachstumsphasen und Düngemittelbedarf für jede Phase, usw.

Unter dem Begriff graphische Visualisierung wird die graphische Darstellung des Status-quo, der Vergangenheits- und Prognosedaten für das gesamte vertikale Gartensystem und für jede Pflanze und jeder Wasserbox verstanden. Zusätzlich zur Darstellung der Daten des vertikalen Gartensystems werden auch die Umweltdaten, wie Temperatur, Feuchtigkeit, Luftqualität... dargestellt. Die Daten können auf einem PC-Monitor oder Smartphone oder Tablet oder jedem anderen Gerät angezeigt werden.

Unter dem Begriff Monitoring wird das kontinuierliche oder zumindest periodische Abrufen und Verarbeiten von Daten für einen Prädiktions-Algorithmus zur Bestimmung der autonomen Aktionen oder Benutzerempfehlungen verstanden. Das erfindungsgemäße vertikale Gartensystem hat damit eine künstliche Intelligenz.

Unter dem Begriff autonome Aktionen wird die Aktionen, die ohne den erforderlichen menschlichen Eingriff (z.B. Bewässerung) durchgeführt werden verstanden.

Unter dem Begriff Benutzerempfehlungen werden alle Benachrichtigungen, die dem Benutzer oder dem Wandhalter zur Verfügung gestellt werden verstanden. Auf der Grundlage von den Benutzerempfehlungen kann der Benutzer die Umgebung verändern oder bessere Entscheidungen bezüglich des vertikalen Gartensystems treffen (z.B. das Fenster öffnen, Wasser in die Wasserbox einfüllen, zusätzliche Beleuchtung verwenden).

Bei einer weiteren bevorzugten Ausführungsform weist das System eine Kamera auf, welche auf das vertikale Gartensystem gerichtet ist. Mit Hilfe der Kamera kann der allgemeine Zustand der einzelnen Pflanzen überwacht werden. Die Pflanzenboxen sind bevorzugt in einem x-y Koordinatensystem angeordnet und weisen alle eine eigene Identifikationsnummer auf. Durch die Kamera findet eine optische Überwachung statt, wobei durch die gezielte Versorgung der einzelnen Pflanzen mit Wasser, Licht, Luft und Nährstoffen bestimmte Pflanzen besonders versorgt werden. Ist der optische Zustand der Pflanze 1.2 (d.h. 1.Reihe, 2.Pflanze) nicht gut, so kann wird dies durch die optische Überwachung festgestellt und durch die extra Zugabe von Wasser, Luft, Licht oder Nährstoffen unterstützt.

Der Gegenstand der vorliegenden Erfindung ergibt sich nicht nur aus dem Gegenstand der einzelnen Ansprüche, sondern auch aus der Kombination der einzelnen Ansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematische Darstellung der Grundplatte mit Sensoren
- Figur 2:: Darstellung des Wasserkastens.
- Figur 3:: Darstellung der Pflanzbox.
- Figur 4:: schematische Darstellung der Grundplatte mit jeweils einem Wasserkasten und einer Pflanzbox
- Figur 5:: schematische Darstellung des Sensors und die entsprechenden Komponenten für die Feuchte- und Wasserstandserfassung.
- Figur 6:: schematische Darstellung des vertikalen Gartensystems mit zahlreichen Pflanzen
- Figur 7:: Rückansicht der Pflanzbox
- Figur 8:: schematische Darstellung der Übertragung der Daten zwischen dem vertikalen Gartensystem und der Cloud

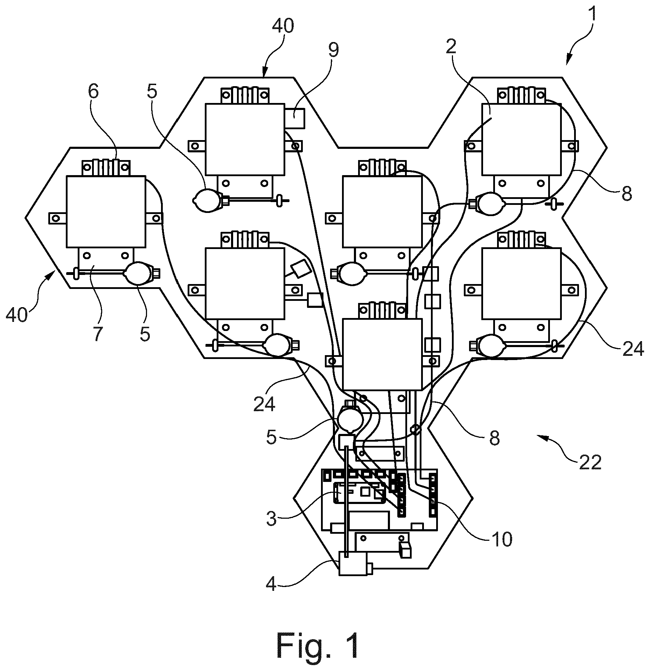

Mit der Figur 1 wird die Grundplatte 1 des vertikalen Gartensystems 22 gezeigt. Die Grundplatte 1 bildet die Basis für die Sensoren 2, dem Pflanzcontroller 3, die Wasserpumpe 4, die Ventile 5, die Schläuche 8, sowie die Verbindungen 24. Die Grundplatte 1 wird an einer vertikalen Wand befestigt, welche sich entweder in einem Innen- oder einem Außenraum befindet.

Die Grundplatte 1 ist somit das Grundgerüst für die Pflanzboxen 17 und Wasserboxen 12. Jeder Pflanzbox 17 ist ein eigener Feuchtigkeitssensor 2 zugeordnet. Der Feuchtigkeitssensor 2 weist eine eigene Aufnahme 23 für die Pflanzbox 17 auf. Die Aufnahme 23 ist als Steckaufnahme ausgebildet, so dass die Pflanzbox 17 ohne Werkzeug an dem Feuchtigkeitssensor befestigt werden kann. Es ist jedoch auch möglich, dass die Aufnahme 23 als Loch ausgebildet ist und die Befestigung mit einer Schraubverbindung erfolgt.

Die einzelnen Feuchtigkeitssensoren 2 sind über die Verbindungen 24 mit dem Pflanzcontroller 3 verbunden. Die Verbindung 24 kann entweder eine Kabelverbindung oder eine kabellose Verbindung, wie z.B. Funktechnik sein.

Auf der Grundplatte 1 ist ferner ein Wasserversorgungssystem 15 angeordnet, welches aus einer Wasserbox 12, einer Wasserpumpe 4, mehreren Schläuchen 8, und mehreren Ventilen 5 besteht. Mit Hilfe der Wasserpumpe 4 wird das Wasser ausgehend von der Wasserbox 12 zu den einzelnen Pflanzboxen 17 gepumpt. Als Verbindungen zwischen der Wasserbox und den Pflanzboxen 17 werden Schläuche 8 eingesetzt. Alle Wasserverbindung sind durch Steckkupplungen miteinander verbunden und können dadurch werkzeuglos miteinander verbunden und wieder gelöst werden. Jede Pflanzbox 17 weist ein eigenes Ventil 5 auf, mit welchem gezielt die jeweilige Wasserversorgung jeder einzelnen Pflanzbox 17 geregelt wird. Die Pflanzbox 17 weist jeweils einen Wassereingang 6 auf, über welchen das Wasser durch den Schlauch 8 der Pflanzbox 17 zugeführt wird. Zusätzlich hierzu weist jede Pflanzbox 17 einen separaten Wasserausgang 7 auf, über welchem überschüssigen Wasser wieder aus der Pflanzbox 17 abgeführt wird. Der Wasserausgang 7 ist wichtig, denn dadurch kann bei einer erhöhten Feuchtigkeit in der Pflanzbox 17 das überschüssige Wasser abgelassen werden und dadurch Staunässe vermieden werden.

Gemäß der Figur 1 weist das gesamte vertikale Gartensystem 22 nur eine Wasserpumpe 4 und eine Wasserbox 12 auf. Dadurch besteht der Vorteil, dass mit nur einer Wasserpumpe 4 mehrere Pflanzboxen 17 mit Wasser versorgt werden. Die Wasserpumpe 4 baut hierzu in den Schläuchen 8 einen Wasserdruck auf, wobei durch die einzelnen Ventile 5 gezielt an die jeweiligen Pflanzboxen 17 Wasser abgeben wird. Das überschüssige Wasser in den Pflanzboxen 17 wird über den Wasserausgang 7 wieder dem Wasserversorgungssystem 15 zugeführt.

Auf der Grundplatte 1 sind mehrere Feuchtigkeitssensoren 2 angeordnet, welche die Basis für eine Pflanzbox 17 bilden. Der Feuchtigkeitssensor 2 kann zusätzlich weitere Sensor 9 aufweisen, mit welchen die Umweltbedingungen (Luftdruck, Temperatur, Licht) festgestellt werden.
Die Anordnung der weiteren Sensoren 9 muss nicht direkt an dem Feuchtigkeitssensor 2 erfolgen. Es ist vielmehr auch möglich einen Sensor 9 an einer zentralen Stelle der Grundplatte 1 anzuordnen.

Entscheidend ist, dass der Feuchtigkeitssensor 2 keinen direkten Kontakt mit dem Inhalt der Pflanzbox 17 hat. Die Feuchtigkeitsmessung erfolgt kapazitiv durch die Rückwand der Pflanzbox 17.

Der Pflanzcontroller 3 ist auf einer Leiterplatte angeordnet. Die Leiterplatte weist weitere Anschlüsse für die Verbindungen 24 auf, so dass das vertikale Gartensystem 22 auf nachträglich um weitere Feuchtigkeitssensoren 2 für Pflanzboxen 17 erweitert werden kann.

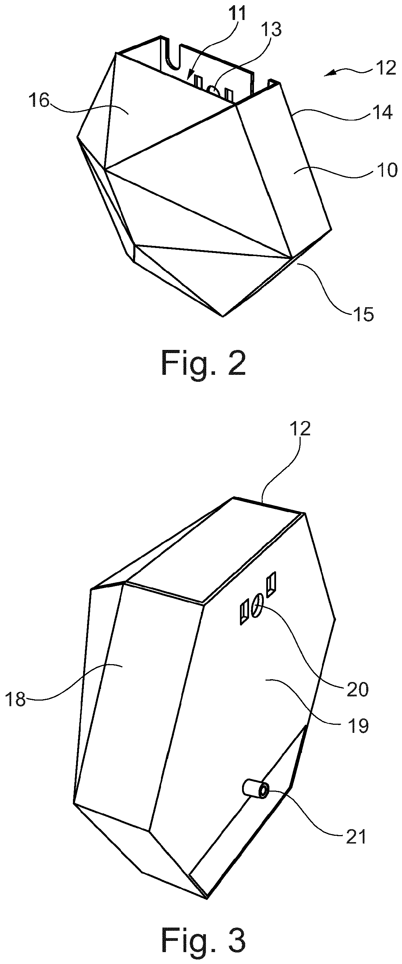

Mit der Figur 2 wird die Wasserbox 12 gezeigt. Die Wasserbox 12 ist Teil des Wasserversorgungssystems 15 und ist hohl ausgebildet und weist ein besonderes Design mit sechs Kanten auf. Das Design der Wasserbox 12 entspricht bevorzugt dem Design der Pflanzbox 17. Dadurch wird ein einheitlicher Effekt bei dem vertikalen Gartensystem 22 erreicht. Sowohl die Wasserbox 12, als auch die Pflanzbox 17 können jedoch auch jede beliebige andere Form, wie z.B. rund, mehreckige oder dergleichen aufweisen.

Auf der Vorderseite der Wasserbox 12 befindet sich eine Ausnehmung 11 für das manuelle Befüllen der Box mit Wasser. Auf der Rückseite 19 der Wasserbox 12 befindet sich eine Halterung 13 für die Befestigung der Wasserbox 12 an der Grundplatte 1. Die Wasserbox 12 weist ferner einen Wasserstandsensor 14 auf, mit welchem die Wassermenge (Füllstand) in der Wasserbox 12 kontrolliert wird. Der Wasserstandsensor 14 ist beispielsweise als Lasersensor oder ToF-Sensor ausgebildet. Vorzugsweise ist die Wasserbox 12 nach oben geöffnet. Im Bereich dieser Öffnung ist der Wasserstandsensor 14 angeordnet und misst den Füllstand des Wassers innerhalb der Wasserbox 12. Dadurch kann die noch vorhandenen Wassermenge ermittelt werden.

Ist der Wasserstand in der Wasserbox 12 zu niedrig, so wird dies von dem System erfasst und entweder eine Meldung an den Benutzer gegeben oder das System wird selbstständig durch einen Hausanschluss wieder aufgefüllt. Die Speicherung bzw. das Bevorraten von Wasser in einer Wasserbox 12 hat den Vorteil, dass das beruhigte, gelagerte Wasser besser für die Pflanzen ist und ferner das Wasser die Raumtemperatur aufweist.

Mit der Figur 3 wird die Rückseite 19 der Wasserbox 12 gezeigt. Über den Wassereingang 20 wird der Wasserbox 12 durch einen Schlauch Wasser zugeführt. Über den Wasserausgang 21 wird aus der Wasserbox 12 Wasser abgeführt.

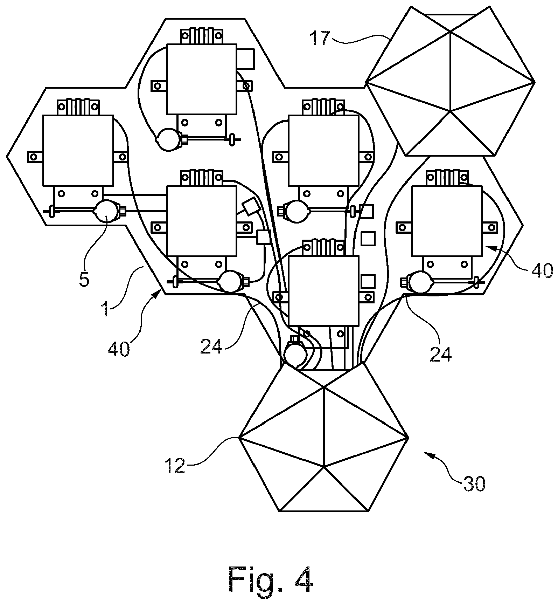

Figur 4 zeigt die Grundplatte 1 mit den Feuchtigkeitssensoren 2 und jeweils einer Pflanzbox 17 und einer Wasserbox 12. Die Pflanzbox 17 und die Wasserbox 12 weisen beiden das gleiche Design auf. Die Feuchtigkeitssensoren 2 sind über die Verbindungen 24 mit dem Pflanzcontroller 3 verbunden.

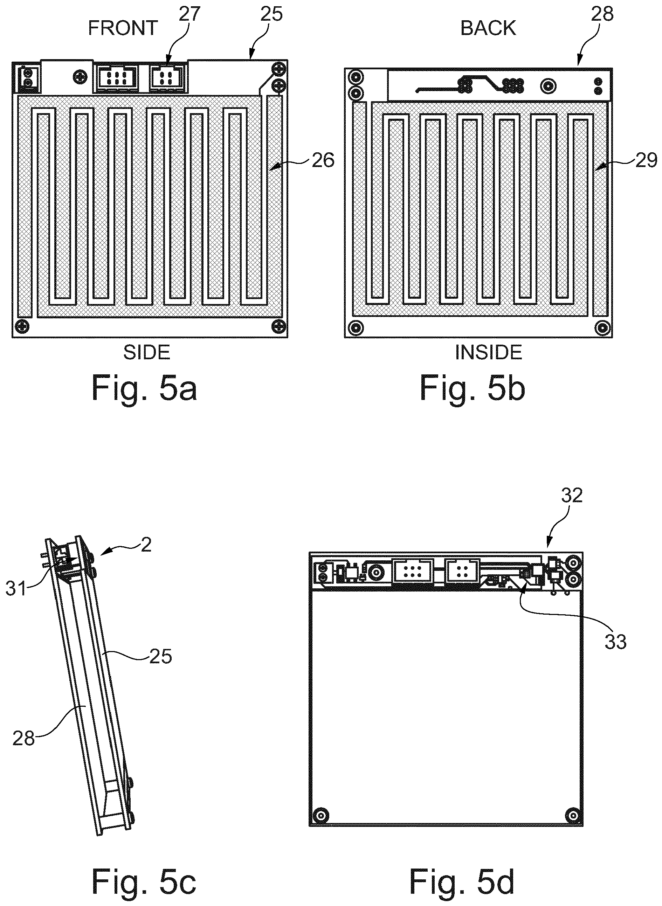

Mit der Figur 5 wird der Feuchtigkeitssensor 2 in verschiedenen Ansichten dargestellt. Der Feuchtigkeitssensor 2 ist als kapazitiver Wassersensor ausgebildet. Mit Hilfe des Feuchtigkeitssensor 2 wird kontaktlos der Flüssigkeitsstand innerhalb der Pflanzbox 17 detektiert. Die kapazitiven Abtasttechnik ist kostengünstig, hochauflösen und kontaktlos.

Durch einen hochauflösenden Hochgeschwindigkeits-Kapazitäts-Digital-Wandler wird Rausch- und Störungsanfälligkeit (EMI-resistent) des Sensors begrenzt. Durch eine sehr große maximale Eingangskapazität ist der Einsatz von entfernten Sensoren sowie die Verfolgung von Umgebungsveränderungen über die Zeit, Temperatur und Feuchtigkeit möglich.

Der Feuchtigkeitssensor 2 überträgt die momentane Umgebungstemperatur und den logischen Zustand des konduktiven Sensors zyklisch an den Pflanzcontroller 3. Dies bedeutet, dass die An- bzw. Abwesenheit von leitfähigen Flüssigkeiten innerhalb der Pflanzbox 17 detektiert wird und zyklisch an den Pflanzcontroller 3 übertragen wird.

Die Energieversorgung des Feuchtigkeitssensors 2 erfolgt entweder über die Kabelverbindung 24, eine Batterie oder über eine Photovoltaikzelle. Die Übertragung der Daten an den Pflanzcontroller 24 erfolgt entweder über die Kabelverbindung 24 oder über einen Funktransmitter.

Die Figur 5a zeigt die Frontplatte 25 des Feuchtigkeitssensors 2. Auf der Frontplatte 25 befindet sich eine leitende Fläche, welche aus einem beliebigen Metall oder einem Leiter besteht. Des Weiteren befindet sich auf der Frontplatte 25 die Anschlüsse 27 für die Verbindung 24 mit dem Pflanzcontroller 3.

Mit der Figur 5b wird die Rückplatte 28 gezeigt, auf welcher sich ebenfalls leitenden Flächen 29 befinden.

Figur 5c zeigt den Feuchtigkeitssensor 2 in einer Seitenansicht, wobei die Frontplatte 25 und die Rückplatte 28 mit einem Verbinder 31 miteinander verbunden sind. Entscheidend ist, dass die leitende Fläche 26 (Frontplatte) und die leitende Fläche 29 (Rückplatte) sich nicht im Wasser- oder Pflanzkasten 12, 17 befinden, sondern außerhalb angeordnet sind. Die Messung der Feuchtigkeit bzw. des Wasserstands in er Pflanz- oder Wasserbox 12, 17 erfolgt durch die jeweilige Wand (Plastikwand) der Boxen 12, 17. Der Feuchtigkeitssensor 2 befindet sich somit nicht im Nassbereich des vertikalen Gartensystems 22.

Mit der Figur 5d wird die Innenseite des Feuchtigkeitssensor 2 gezeigt. Hierbei handelt es sich um die Rückseite 32 von der Frontplatte 25. Der Sensor 2 ist als FDC Sensor 32 (Fault detection and classification (FDC) transforms sensor) ausgebildet.

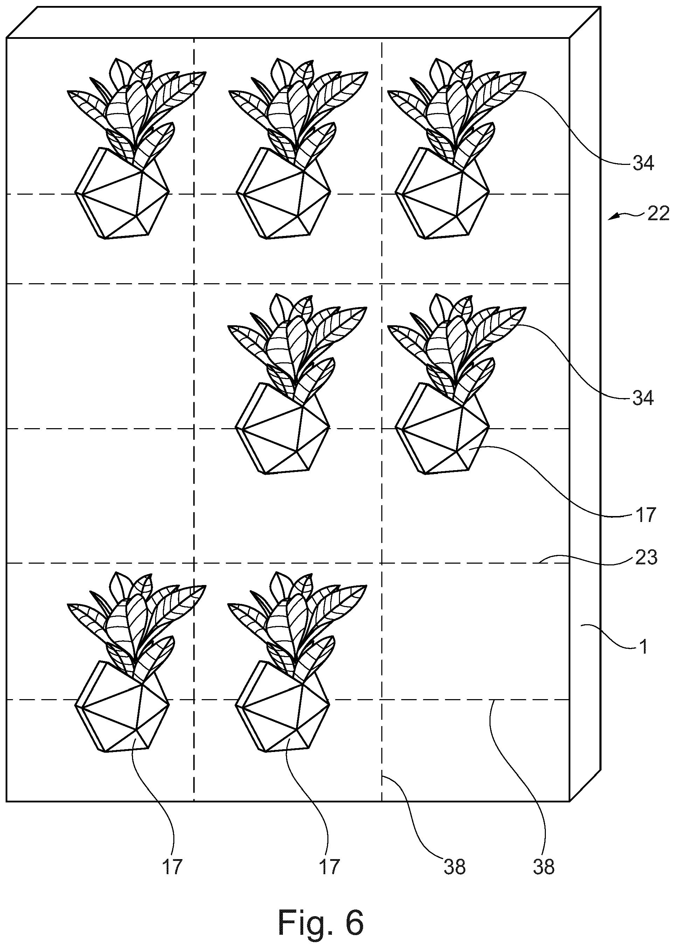

Figur 6 zeigt das vertikale Gartensystem 22 mit der Grundplatte 1. Auf der Grundplatte 1 sind in einem Rastersystem 38 zahlreiche Pflanzboxen 17 mit Pflanzen 34 angeordnet. Die Pflanzen 34 werden durch die Pflanzboxen 17 aufgenommen und versorgt. Die Versorgung der Pflanzboxen 17 erfolgt durch eine Versorgungseinheit

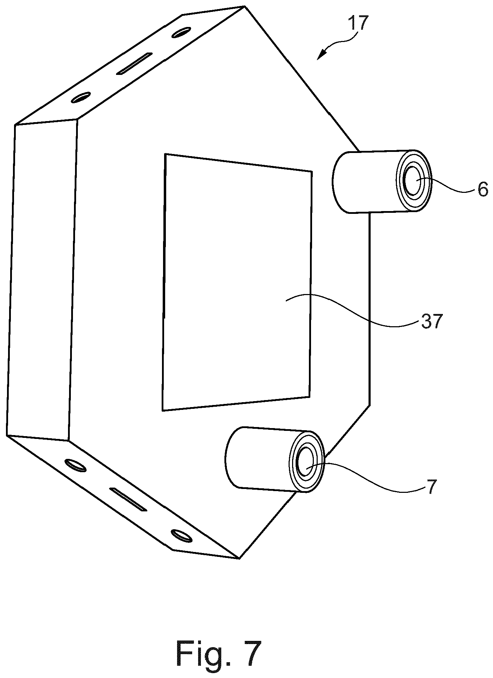

Figur 7 zeigt die Pflanzbox 17 an deren Rückseite sich ein Wassereingang 6 und ein Wasserausgang 7 befindet. Zusätzlich weist die Rückseite der Pflanzbox 17 eine Fläche 37 für den Feuchtigkeitssensor 2 auf. Durch die Fläche 37 detektiert der Feuchtigkeitssensor 2 eine Feuchtigkeit innerhalb der Pflanzbox 17. Bevorzugt erfolgt die Messung des Feuchtigkeitssensors 2 kontaktlos durch die Pflanzbox 17. Die Fläche 37 kann in diesem Bereich jedoch eine geringere Wandstärke aufweisen, was die kontaktlose Messung positiv beeinflusst.

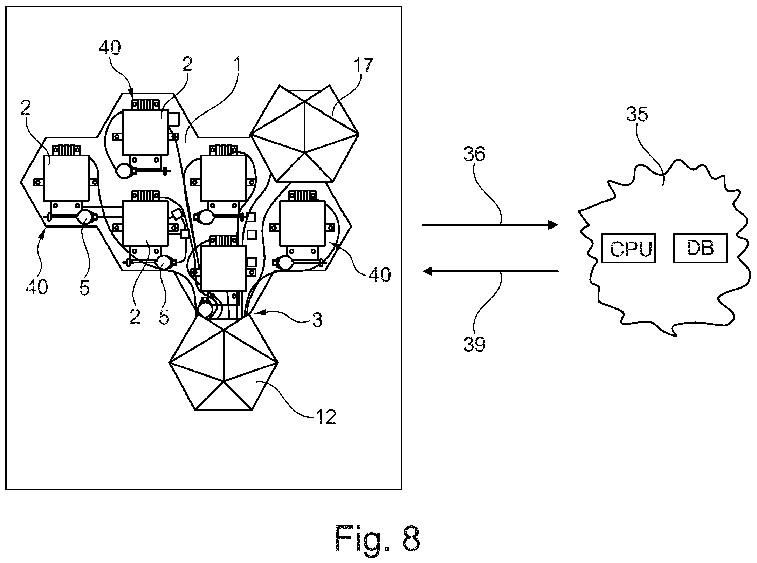

Mit der Figur 8 wird die Datenübertragung zwischen der Grundplatte 1 und der Cloud 35 gezeigt. Der Pflanzcontroller 3 ist auf der Grundplatte 1 angeordnet und erhält die Daten von den Sensoren, wie z.B. dem Feuchtigkeitssensor 2, Sensore für Umweltbedingungen oder dem Wasserstandsensor 14. Diese Daten 36 werden über eine Schnittstelle an die Cloud 35 übertragen. Die Cloud 35 weist u.a. einen eigenen Controller (CPU) und eine Datenbank (DB) auf. In der Cloud 35 werden die Daten 36 gesammelt, analysiert und verarbeitet. Als Ergebnis wird ein Optimalwert 39 für jede einzelne Pflanze 34 gebildet, welcher an den Pflanzcontroller 3 übertragen wird. Der Pflanzcontroller 3 steuert dann die Versorgungseinheit 30 und setzt den Optimalwert 39 um.

### Bezugszeichen

- 1.: Grundplatte
- 2.: Feuchtigkeitssensor
- 3.: Pflanzcontroller
- 4.: Wasserpumpe
- 5.: Ventil
- 6.: Wassereingang für 17
- 7.: Wasserausgang für 17
- 8.: Schlauch
- 9.: Sensor für Umweltbedingungen
- 10.: Erweiterung
- 11.: Ausnehmung
- 12.: Wasserbox
- 13.: Befestigung
- 14.: Wasserstandsensor
- 15.: Wasserversorgungssystem
- 16.: Deckel
- 17.: Pflanzbox
- 18.: Schale
- 19.: Rückseite
- 20.: Wassereingang von 12
- 21.: Wasserausgang von 12
- 22.: vertikales Gartensystem
- 23.: Aufnahme für 17
- 24.: Verbindung
- 25.: Frontplatte
- 26.: leitende Fläche
- 27.: Anschlüsse
- 28.: Rückplatte
- 29.: leitende Fläche
- 30.: Versorgungseinheit
- 31.: Verbinder
- 32.: Rückseite von 25
- 33.: FDC Sensor
- 34.: Pflanze
- 35.: Cloud
- 36.: Daten
- 37.: Fläche für 2
- 38.: Raster
- 39.: Optimalwert
- 40.: Mess- und Versorgungseinheit

## Patentansprüche

1. Vertikales Gartensystem (22) für Pflanzen (34) bestehend aus einer Grundplatte (1) an der mindestens eine Pflanzenbox (17) für mindestens eine Pflanze (34) angeordnet ist, wobei eine Versorgungseinheit (30) die Pflanze (34) in der Pflanzbox (17) mit Wasser, Nahrung und/oder Energie versorgt, wobei mindestens ein Feuchtigkeitssensor (2) die Feuchtigkeit innerhalb einer Pflanzbox (17) misst und anhand der gewonnenen Daten (36) ein Pflanzcontroller (3) die Versorgungseinheit (30) steuert, **dadurch gekennzeichnet, dass** jeder einzelnen Pflanzbox (17) eine Mess- und Versorgungseinheit (40) zugeordnet ist, wobei die Mess- und Versorgungseinheit (40) den Zustand jeder einzelnen Pflanze (34) erfasst und jede einzelne Pflanze (34) individuell versorgt.

2. Vertikales Gartensystem (22) für Pflanzen (34) bestehend aus einer Grundplatte (1) an der mindestens eine Pflanzenbox (17) für mindestens eine Pflanze (34) angeordnet ist, wobei eine Versorgungseinheit (30) die Pflanze (34) in der Pflanzbox (17) mit Wasser, Nahrung und/oder Energie versorgt und mindestens ein Feuchtigkeitssensor (2) die Feuchtigkeit innerhalb der Pflanzbox (17) misst und anhand der gewonnenen Daten (36) ein Pflanzcontroller (3) die Versorgungseinheit (30) steuert, **dadurch gekennzeichnet, dass** der Pflanzcontroller (3) über eine Schnittstelle mit einer Cloud (35) verbunden ist, wobei die Cloud (35) die Daten (36) von dem Pflanzcontroller (3) auswertet und in Form eines Optimalwert (39) an den Pflanzcontroller (3) zurück überträgt.

3. Vertikales Gartensystem (22) nach Anspruch 1 oder 2, **dadurch gekennzeichnet, dass** die Mess- und Versorgungseinheit (40) mindestens einen Feuchtigkeitssensor (2) umfasst, welcher als kapazitiver Sensor ausgebildet ist und kapazitiv die Feuchtigkeit in der Pflanzbox (17) von außen durch die Wand der Pflanzbox (17) misst.

4. Vertikales Gartensystem (22) nach einem der Ansprüche 1 bis 3, **dadurch gekennzeichnet, dass** der Feuchtigkeitssensor (2) eine Trägerbasis für die Pflanzbox (17) auf der Grundplatte (1) bildet.

5. Vertikales Gartensystem (22) nach einem der Ansprüche 1 bis 4, **dadurch gekennzeichnet, dass** die Mess- und Versorgungseinheit (40) mindestens eine Wasserbox (12) umfasst, welche auf der Grundplatte (1) angeordnet ist und dass ein Wasserstandsensor (14) den Wasserstand in der Wasserbox (12) misst.

6. Vertikales Gartensystem (22) nach einem der Ansprüche 1 bis 5, **dadurch gekennzeichnet, dass** die Grundplatte (1) mindestens einen weiteren Sensor (9) aufweist, welcher mindestens eine weitere Umweltbedingung, wie z.B. Licht, Luftfeuchtigkeit, Raumtemperatur oder Luftqualität misst und die gemessenen Daten (36) an den Pflanzcontroller (3) überträgt.

7. Vertikales Gartensystem (22) nach Anspruch 6, **dadurch gekennzeichnet, dass** die Cloud (35) als externe IT-Infrastruktur ausgebildet ist, welche die Daten (36) von dem Pflanzcontroller (3) auswertet und mit weiteren Daten von einer externen Wettervorhersage oder von weiteren vertikalen Gartensystemen (22) kombiniert, um den Optimalwert (39) zu bilden.

8. Vertikales Gartensystem (22) nach einem der Ansprüche 1 bis 7, **dadurch gekennzeichnet, dass** die Cloud (35) eine Empfehlung oder eine Handlungsanweisung in Form eines akustischen Signals oder einer Mitteilung auf der Grundplatte (1) oder auf einem PC oder APP eines Benutzers sendet.

9. Vertikales Gartensystem (22) nach einem der Ansprüche 1 bis 8, **dadurch gekennzeichnet, dass** die Mess- und Versorgungseinheit (40) mindestens eine Wasserbox (12), mindestens eine Wasserpumpe (4), mindestens einen Schlauch (8) und mindestens ein Ventil (5) aufweist, wobei das Wasser durch einen Wassereingang (6) in die Pflanzbox (17) eingeleitet und das überschüssige Wasser über einen Wasserausgang (7) aus der Pflanzbox (17) ausgeleitet wird.

10. Vertikales Gartensystem (22) nach einem der Ansprüche 1 bis 9, **dadurch gekennzeichnet, dass** das vertikale Gartensystem (22) eine optische Kamera aufweist, welche die Pflanzen (34) aufnimmt, wobei die aufgenommen Bilder von dem Pflanzcontroller (3) und/oder der Cloud (35) gesammelt, analysiert und zur Bildung des Optimalwertes (39) ausgewertet werden.
